# EUROPEAN PATENT SPECIFICATION

(11) **EP 4 481 257 B1**
(45) Date of publication and mention of the grant of the patent: **08.04.2026**
(21) Application number: 23708262.3
(22) Date of filing: 10.02.2023
(51) Int. Cl.: F16L 55/168, F16L 23/02

(54) **METHOD FOR ELIMINATING FLUID LEAKAGES IN FLANGE CONNECTIONS BY MEANS OF SEALING THE CIRCUIT WITHOUT EMPTYING IT, AND LEAKAGE DIVERTING EQUIPMENT FOR SAID METHOD**
VERFAHREN ZUR BESEITIGUNG VON FLÜSSIGKEITSLECKAGEN IN FLANSCHVERBINDUNGEN MITTELS KREISLAUFABDICHTUNG OHNE ENTLEERUNG UND LECKAGEUMLEITUNGSEINRICHTUNG FÜR DIESES VERFAHREN
PROCÉDÉ POUR L'ÉLIMINATION DE FUITES DE FLUIDE DANS DES LIAISONS DE BRIDES PAR SCELLEMENT SANS VIDANGE DU CIRCUIT ET ÉQUIPEMENT DE DÉRIVATION DE FUITE POUR LEDIT PROCÉDÉ

(30) Priority: 17.02.2022 ES 202230134
(43) Date of publication of application: 25.12.2024
(73) Proprietor: Red Electrica de España S.A.U., 28109 La Moraleja (Madrid) (ES); Repuestos Isodel, S.A., 28031 Madrid (ES)
(72) Inventor: ARRANZ MARISCAL, Luis Miguel, 28109 La Moraleja (ES); VIVAS SÁNCHEZ, Alejandro, 28109 La Moraleja (ES); MOSQUERA MUÑOZ, Manuel Ulises, 28031 Madrid (ES); REQUENA GUTIÉRREZ, Raúl, 28031 Madrid (ES)
(74) Representative: Fernandez Pou, Felipe
(86) International application number: PCT/ES2023/070073
(87) International publication number: WO 2023/156692

(56) References cited:
- JP-A- 2013 032 802
- JP-B2- 4 708 947
- KR-B1- 101 711 137
- US-A- 4 133 351

## Description

### OBJECT OF THE INVENTION

As expressed in the title of this specification, the invention relates to a method for eliminating fluid leakages in flange connections by means of sealing the circuit without emptying it and to a leakage diverting equipment for said method, providing, for the function for which it is intended, the advantages and features described in detail below.

The object of the present invention relates to a method of containing and repairing fluid leakages in pipe connections or other fluid containers of an installation (said connections provided with attaching by means of flanges, an internal sealing system and tightening by means of bolts or screw elements), without the need to empty the circuit containing said leaking fluid, where the installation to be repaired can remain in operation during said process. This method, based on the external application of a chemical sealing product, is essentially distinguished by contemplating the use of leakage diverting equipment, comprising a vacuum pump that sucks the fluid from the leaking sealing system with tubular bolts specially designed for this purpose and which prevent contact of the fluid with the sealant, allowing the fluid leakage to be contained externally without dismantling the flanges and other elements of the sealing system from the connection between the tubes or other parts of the installation or circuit containing said fluid, and which may be internally subjected to the pressure of said fluid. A second aspect of the invention relates to the aforementioned leakage diverting equipment.

### FIELD OF APPLICATION OF THE INVENTION

The field of application of the present invention falls within the sector of the industry dedicated to carrying out leakage sealing operations in fluid circuit installations with flanged connections, connections in blanking covers or watertight connections using bodies or equipment screwed together, regardless of their geometry (connections that will have an internal sealing system and tightening by means of bolts or screw elements), at the same time covering the scope of the equipment and systems to carry out said operations.

### BACKGROUND OF THE INVENTION

Repairs to leaking fluid sealing systems or connections are typically repaired in the following ways:
- Stopping the operation of the system or circuit containing the leaking fluid, emptying the fluid and dismantling the connections of the leaking solid bodies, and replacing and/or repairing the sealing elements (normally gaskets) with new ones. The problem with this solution is obviously having to stop the system from operating, which can cause significant drawbacks.
- Installing, externally to the leaking connection, a mechanical element (for example, a metal clamp) that has a gasket or sealing system. Once this element is installed, it creates an additional watertight volume between the leaking connection and the external environment, containing the leakage inside said additional watertight volume, preventing the fluid from escaping to the outside. The problem with this solution is that in order to install this system, the geometry of the connection must have certain characteristics that adapt to the design of the mechanical element.
- Installing, externally to the leaking connection, bolts for injecting sealant (under pressure) on the connection flange that has lost its watertightness, and even a mechanical element (for example, a metal clamp) that has a cavity for injecting sealant. Once the sealant has been injected under pressure, it will complete its curing process, containing the leakage inside said additional watertight volume, preventing the fluid from escaping to the outside. The problem with this solution is that the fluid remains in contact with the sealant and therefore causes bubbles to appear that prevent effective stoppage.
- Making a mould on site over the leaking connection and filling it with a liquid resin or the like which, when solidified, creates a solid compact flange that stops the leakage. This solution is understandably complex and expensive.

An example of the existing prior art can be seen in patent application no. JP2013032802A, which discloses a method for eliminating fluid leakages in a flange joint, comprissing the steps of: joining both ends of a band-shaped sealing member to form a ring shape; covering a flange outer periphery with the ringshaped sealing member; winding a fastening band on the outside of the sealing member to form a ring shape via a stopper and fastening the fastening band to fix the stopper; checking leakage in a bolt/nut of the flange joint to be repaired; removing the bolt/nut in which leakage is identified to insert a repair jig into a bolt hole of the bolt/nut; and filling the bolt hole with a resin sealing material via the repair jig. This invention, however, does not provide a solution for vacuum draining while the system or circuit containing the leaking fluid is operating, so the need to stop operating and to empty the circuit in order to fully repair the fluid leakage still remains.

The objective of the present invention is, therefore, to provide an alternative system for carrying out repairs of this type that avoids the drawbacks of known systems and improves the results obtained without having to empty the circuit and stop the operation of the equipment or installation in which it is located.

### DESCRIPTION OF THE INVENTION

The method for eliminating fluid leakages in connections by means of sealing the circuit without emptying it and the leakage diverting equipment for said method proposed by the invention are configured as the ideal solution to the aforementioned objective, and the characterising details that make it possible and distinguish them are suitably described in the final claims accompanying the present description.

Specifically, what the invention proposes, as previously indicated, is a method for eliminating fluid leakages in pipe connections or other fluid containers of an installation, specifically metal flange connections, covers or connections of bodies/equipment connected together by means of screw elements, without the need to empty the circuit containing said leaking fluid, which combines the surface application of a chemical sealing product or products on the external surface of the physical elements that make up said connection and through which the fluid leaks, with the use of equipment that ensures diverting the leakage in a controlled and external manner by means of suction bolts and other specific accessories connected to a suction system by means of a vacuum pump.

This suction system diverts the fluid leakage from the area where the chemical sealants are applied to a controlled area for the entire time it takes for the chemical sealant applied to cure on the surface, allowing the surface on which the sealant is applied to remain clean and free of leaking fluid. This advantageously allows said sealant to cure without being subjected to the presence or pressure of the fluid, since this would cause bubbles in the case of gases or wet and contaminate the surface in the case of liquids, and guaranteeing its maximum adherence to the applied surface, allowing any existing leakage points to be plugged.

For this purpose, and more specifically, the method object of the invention, for eliminating fluid leakages in connections by means of sealing the circuit without emptying it, essentially comprises the following steps:
- Conditioning of the area, to remove paint and/or possible layers of protection and leave the metal clean.
- Replacement of some of the screw elements that attach the flanges of the connection, preferably at least at four points (depending on the geometry and dimensions of the flange), with hollow suction bolts suitable for coupling to a vacuum pump of the leakage diverting equipment.
- Installation of the leakage diverting equipment by means of connecting a system of hoses to the bushings provided in the suction bolts and which, in turn, is connected to a vacuum pump with which the flow of the leaked fluid is diverted to a container external to the connection.
- Application, in the flange connection, of between three and five turns of Teflon thread stretched with medium intensity, in the connections between the respective flanges comprising the connection. To secure this thread, a dot of sealing product is applied. A thin layer of sealant is then applied to the entire connection perimeter of the flanges containing the Teflon thread.
- Carrying out several applications of sealing product, each in several thin layers, over the entire surface of the conditioned flange, keeping the leaked fluid diverting equipment in operation during the curing time of said product.

Preferably, the method also comprises a final inspection step in which, after removing the leakage diverting equipment, the leakage containment check is carried out by applying, in the case of gas, a leakage detection spray or electronic analyser to the treated area.

Considering that the leakage to be treated is located in the connection of the adjustment flanges, and since, in addition, the method includes sealing the entire connection perimeter of the elements involved, the preliminary step of searching for and locating the leakage point is omitted.

In turn, a second aspect of the invention relates to the leakage diverting equipment used in the described method, basically comprising:
- a plurality of suction bolts, made up of hollow and perforated or grooved threaded tubes (depending on the dimensions of the thread), which are replaced with some of the screw elements for attaching the connecting flanges, and to which a connection bushing is coupled;
- a set of conduction hoses which at one end are connected to the bushing of each suction bolt and at the opposite end to a suction manifold block and, through this, to a vacuum pump;
- a suction collector block where the hoses converge; and
- a vacuum pump

If necessary, the equipment would also have a leaked fluid tank that is connected to the vacuum pump to collect the fluid diverted from the suction bolts.

In this way, when the vacuum pump is activated, the leaked fluid between the flanges of the connection is sucked through the holes in the suction bolts and conducted, through the circuit of hoses, towards the atmosphere or the container tank, whereby the system allows the applied chemical sealant to cure, without being subjected to the presence or pressure of the fluid, guaranteeing its maximum adherence to the applied surface (dry surface and without pressure from the leaked fluid), allowing the existing leakage points to be plugged.

### DESCRIPTION OF THE DRAWINGS

To complete the description provided herein, and for the purpose of helping to make the features of the invention more readily understandable, this description is accompanied by drawings constituting an integral part of the same, which by way of illustration and not limitation represents the following:
Figure 1 shows a schematic side elevational representation of an example of a connection with bolted flanges for which the method and the diverting equipment object of the invention are intended;
Figure 2 shows a schematic section view of the connection, according to section A-A indicated in Figure 1, where an example of a fluid leakage to be repaired can be observed;
Figure 3 shows a section view of the connection, similar to that shown in Figure 2, showing an example of repair according to the known art, applying sealing product without any prior preparation, directly on the surface of the flanges and without emptying;
Figures 4 to 9 show, in respective schematic section views, the different steps comprised in the method for eliminating fluid leakages object of the invention, as well as an example of the leakage diverting equipment for said method, visible in Figures 6 to 8.

### PREFERRED EMBODIMENT OF THE INVENTION

In view of the aforementioned figures, and in accordance with the adopted numbering, one may observe therein a non-limiting exemplary embodiment of the method and equipment of the invention, comprising what is described in detail below.

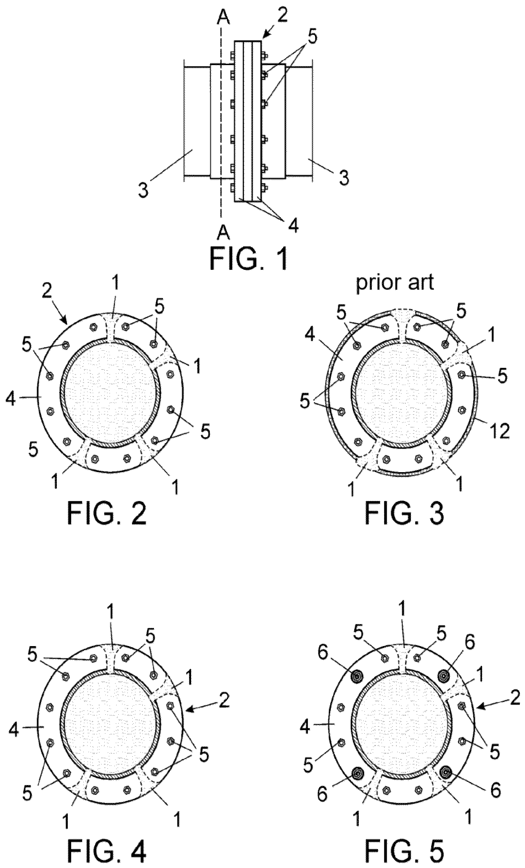

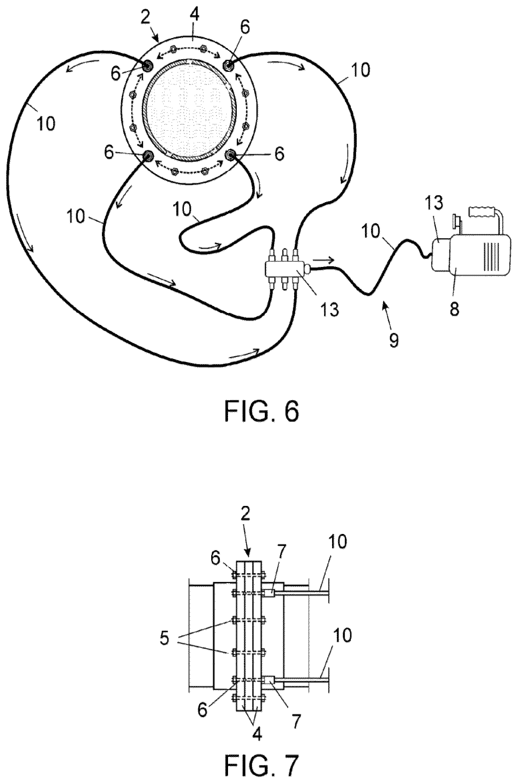

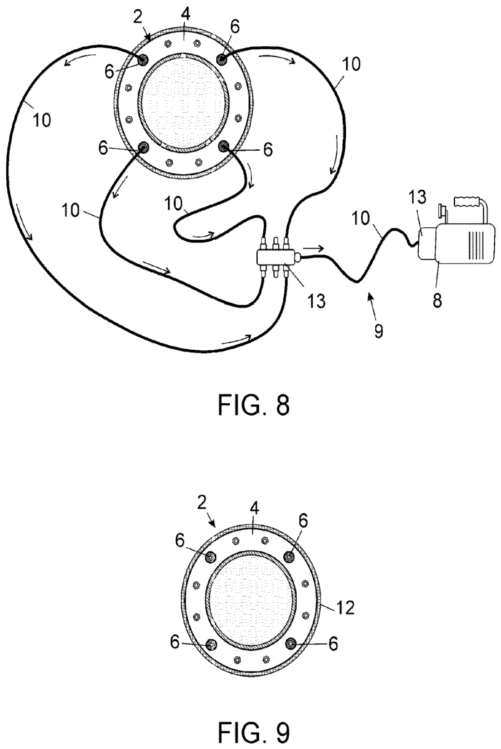

Thus, as can be observed in said figures, the method for eliminating fluid leakages (1) in connections (2) of tubes (3) or other elements made up of two or three metal flanges (4) connected with screw elements (5), without the need to empty the circuit containing said leaking fluid, essentially comprises the following steps:
- A first step of conditioning of the connection area (2) (Figure 4), to remove, if necessary, the paint and/or possible layers of protective coating and leave the metal clean.
- A second step of replacement of the elements of the screw elements (5) that attach the flanges (4) of the connection (1), preferably four (Figure 5), with suction bolts (6) provided with bushings (7) suitable for coupling a vacuum pump (8) of leakage diverting equipment (9) specially designed for this purpose.
- A third step of installation and actuation of the aforementioned leakage diverting equipment (9), by means of connecting a circuit of hoses (10) to the bushings (7) of the suction bolts (6) and which, in turn, is connected to the vacuum pump (8) and, from this, if necessary, to a fluid container tank to which the flow of the leaked fluid is diverted once the pump (8) has been activated (Figures 6 and 7).
- A fourth step of application of Teflon thread in the connection slot between the flanges (4), and subsequently applying chemical sealing product (12), in several thin layers, over the entire surface of the conditioned flange, keeping the leakage diverting equipment (9) described in the previous point in operation during the curing time of said chemical sealing product (12) (Figure 8), after which said equipment (9) can be disconnected and uninstalled (Figure 9).

Preferably, the method also comprises a fifth inspection step in which, after removing the leakage diverting equipment (9), the leakage containment check is carried out by applying, in the case of gas, a leakage detection spray or an electronic analyser to the treated area.

In a preferred embodiment, in the step of conditioning of the connection area (2), where all the paint and/or protective material must be removed until leaving the metal clean, this must be carried out on the entire edge of the elements involved in said connection (2). Once the protective material has been removed, roughness should preferably be generated, by means of coarse-grain sandpaper, on the entire surface on which the chemical sealing product (12) will be applied, thus facilitating its adherence.

Furthermore, in the connections (2) that allow it, a groove or channel can be made with a hand-held router around the entire perimeter of the connection joint between the flanges (4) to guide and maintain the position of the Teflon thread which, preferably, makes up the sealing product (12) that is applied in later steps around the entire connection perimeter.

On the other hand, at the step of replacement of the screw elements (5) of the connection (2), it is convenient to point out that this action must be carried out on each connection element separately, in that said elements must be replaced one by one by the suction bolts (6) and bushings (7) specially designed for this repair.

To do this, remove the existing screw elements (5) (nut, washer, bolt). After removing them, the contact marks must be cleaned, removing any traces of paint or rust. Additionally, the area must be conditioned by polishing (with fine-grain sandpaper) around the connection holes, leaving a completely smooth finish to the touch with a minimum width of +20 mm. Additionally, it is advisable to apply a small amount of black silicone when screwing on the bushings (7) of the suction bolts (6).

Logically, a suction bolt (6) with the suitable measurement will be used (generally the length of the bolt will be the result of the sum of the total width of the connection (2) plus +30 mm).

Likewise, preferably, depending on the dimensions and geometry of the flanges (4) of the connection (2) that lost their watertightness, as well as their dimensions, the minimum number of special sets of suction bolts (6) and bushings (7) distributed evenly along the circumference of the connection (2) will be determined, where it is advisable for at least four suction bolts (6) to be installed, for the subsequent coupling of the hoses (10) with which, by means of the pump (8), the vacuum is created and through which the flow of the leaked fluid will be diverted to the tank.

Preferably, the new suction bolt fasteners (6) should be suitably tightened using a torque wrench. If the tightening value is not known in advance, the value used when loosening or removing the screw elements or nuts from the replaced screw element (5) should be applied.

Once all the suction bolts (6) have been tightened in place of the screw elements (5), the quick-connect fittings or sockets are placed in each of the special sockets or bushings (7) for the vacuum of said suction bolts (6), and then the hoses (10) are connected, which hoses are, in turn, connected to a suction manifold block (13) from which a single hose (10) goes out to the vacuum pump (8).

Once all the connections of the leakage diverting equipment (9) have been checked, the vacuum process is started by means of starting up the vacuum pump (8), and the vacuum pressure value reached is monitored.

Regarding the step of application of the chemical sealing product (12), preferably, 3 to 5 turns of PTFE thread (Teflon thread) stretched with medium intensity are applied to each of the flange connections (4). For attachment, a dot of sealing product will be applied first, and then a bead will be applied around the entire perimeter of the connection joints of the flanges (4).

Preferably, 4 to 5 applications of sealing product will then be carried out on the entire conditioned surface, each in thin layers. Application of the sealant may vary depending on environmental conditions. Thus, for cool environments, below 17°, it is advisable for there to be a difference of 45-60 minutes between the first three applications and 2-3 hours for the following ones. At higher temperatures, these times can be considerably reduced.

Finally, in the step of inspection, preferably to complete the process of eliminating or containing leakages, the necessary checks and verifications must be carried out.

Preferably, 24 hours after the first application of the sealing product, the vacuum machine can be removed.

Subsequently, the leakage containment check must be carried out by applying, in the case of gas, a leakage detection spray to the entire treated area, including the attachment elements, that is, the screw elements (5) and the suction bolts (6).

As a final step of this point, the treated area can optionally be bagged. After a minimum period of 4 hours, a measurement must be taken with a LeakSpy ^{®} type apparatus (applicable to locate leakages). It allows the concentration of fluid in the air to be measured by means of an infrared sensor, the tube of which must be inserted through the top of the bag.

As for the leakage diverting equipment (9) used in the described method and which, in turn, is also part of the invention, it basically comprises the following elements:
- a plurality of suction bolts (6) made up of hollow and perforated or grooved threaded tubes, which are replaced with some of the screw elements (5) of the flanges (4) of the connection (2), each of them having a vacuum connection bushing (7);
- a circuit of conduction hoses (10) which at one end are connected to the connection bushing (7) of each suction bolt (6) and at the opposite end to a manifold block (13) which, in turn, is connected to a vacuum pump (8) by means of another hose (10);
- a suction manifold block (13) where the conduction hoses (10) converge and are distributed; and
- a vacuum pump (8) that sucks up the leaked fluid;

If necessary, the equipment could also have a leaked fluid tank that is connected to the vacuum pump (8) to collect the fluid diverted from the suction bolts (6).

Looking at Figure 3, it can be observed how, with the direct application of a sealing product (12) on the connection, as occurs according to the prior art, the fluid leakages (1) produce bubbles due to the pressure of the fluid when it comes into contact with the product.

Having sufficiently described the nature of the present invention, as well as the ways in which it may be implemented, it is not considered necessary to elaborate on the explanation thereof in order for a person skilled in the art to understand the scope of the invention and the advantages derived therefrom.

## Claims

1. A method for eliminating fluid leakages in metallic flanged connections using screw elements (5) by means of sealing the fluid circuit without emptying it, in particular for eliminating fluid leakages (1) in connections (2) of pipes (3) made up of two or three metal flanges (4) connected with screw elements (5), connections in blanking covers or watertight connections by means of bodies or equipment screwed together, **characterised by** comprising at least the following steps:
- a first step of conditioning a connection area (2) to leave the metal clean, preferably including eliminating paint and/or layers of some protective coating;
- a second step of replacement of at least one of the elements of the screw elements (5) that attach the flanges (4) of the connection (1) with suction bolts (6) provided with connection bushings (7) suitable for coupling a vacuum pump (8) of leakage diverting equipment (9);
- a third step of installation and actuation of leakage diverting equipment (9), by means of connecting a circuit of hoses (10) to the bushings (7) of the suction bolts (6) and which, in turn, is connected to the vacuum pump (8);
- a fourth step of application of a chemical sealing product (12) to at least the joints between the flanges (4) of the connection (2), keeping the leakage diverting equipment (9) in operation during the curing time of said chemical sealing product (12), after which said equipment (9) can be disconnected and uninstalled.

2. The method according to claim 1, **characterised by** further comprising a fifth step of inspection in which, after removing the leakage diverting equipment (9), the containment of the leakage is checked by applying leakage detector spray to the treated area.

3. The method according to claim 1 or 2, **characterised in that** in the step of conditioning of the connection area (2), roughness is generated on the entire surface on which the chemical sealing product (12) will be applied.

4. The method according to any of the preceding claims, **characterised in that** in the step of conditioning of the connection area (2), a groove or channel is made with a hand-held router around the entire perimeter of the connection joint between the flanges (4) to guide and maintain the position of the sealing product (12) that is applied in later steps around the entire connection perimeter.

5. The method according to any of the preceding claims, **characterised in that** in the step of replacement of the screw elements (5) of the connection (2), the existing screw elements (5) are removed, the contact marks are cleaned, removing any traces of paint or rust by polishing around the connection holes, leaving a completely smooth finish, and black silicone is applied when screwing on the bushings (7) of the suction bolts (6).

6. The method according to any of the preceding claims, **characterised in that** in the step of replacement of the screw elements (5) of the connection (2), four suction bolts (6) are installed.

7. The method according to any of the preceding claims, **characterised in that** in the step of application of the chemical sealing product (12), 3 to 5 turns of PTFE thread (Teflon thread) stretched with medium intensity are applied to each of the flange connections (4).

8. The method according to claim 7, **characterised in that**, subsequently, 4 to 5 applications of sealing product will be carried out on the entire conditioned surface, each in thin layers.

9. The method according to claim 2, **characterised in that** during the step of inspection, a bagging of the treated area may be carried out, after a minimum time of 4 hours, a measurement must be carried out with an apparatus to locate leakages with an infrared sensor.

10. Leak diverting equipment applicable in a method for eliminating fluid leakages in metallic flanged connections using screw elements (5) by means of sealing the circuit without emptying it, particularly for eliminating fluid leakages (1) in connections (2) of pipes (3) made up of two or three metal flanges (4) connected with screw elements (5), connections in blanking covers or watertight connections by means of bodies or equipment screwed together, **characterised by** comprising:
- a plurality of suction bolts (6) made up of hollow and perforated or grooved threaded tubes, which are configured to replace some of the screw elements (5) of the flanges (4) of the connection (2), each of the suction bolts (6) having a vacuum connection bushing (7);
- a circuit of conduction hoses (10) which at one end are connected to the connection bushing (7) of each suction bolt (6) and at the opposite end to a manifold block (13) which, in turn, is connected to a vacuum pump (8) by means of another hose (10);
- a suction manifold block (13) where the conduction hoses (10) converge and are distributed; and
- a vacuum pump (8) that sucks up the leaked fluid.

11. The leak diverting equipment according to claim 10, **characterised in that** it also includes a tank containing leaked fluid, which is connected to the vacuum pump (8) to collect the fluid derived from the suction pins (6).

## Patentansprüche

1. Eine Methode zur Beseitigung von Flüssigkeitslecks in metallischen Flanschverbindungen mit Schraubelementen (5) durch Abdichtung des Flüssigkeitskreises ohne Entleerung, insbesondere zur Beseitigung von Flüssigkeitslecks (1) in Verbindungen (2) von Rohren (3) bestehend aus zwei oder drei Metallflanschen (4), die mit Schraubelementen verbunden sind (5), Verbindungen in Blendabdeckungen oder wasserdichten Verbindungen mittels zusammengeschraubten Körpern oder Geräten, **Gekennzeichnet dadurch, dass** mindestens die folgenden Schritte bestehen:
- ein erster Schritt zur Konditionierung einer Verbindungsfläche (2), damit das Metall sauber bleibt, vorzugsweise einschließlich des Entfernens von Farbe und/oder Schichten einer Schutzbeschichtung;
- ein zweiter Schritt zum Austausch von mindestens einem der Elemente der Schraubenelemente (5), die die Flansche (4) der Verbindung verbinden, (1) durch Saugbolzen (6), die mit Verbindungsbuchsen ausgestattet sind (7), die sich für die Kopplung einer Vakuumpumpe (8) der Leckablenkungsanlage eignen (9);
- ein dritter Schritt der Installation und Betätigung von Leckableitungsgeräten (9), indem ein Schläuchekreis (10) mit den Buchsen (7) der Saugbolzen (6) verbunden wird und wiederum mit der Vakuumpumpe verbunden ist (8);
- ein vierter Schritt der Anwendung eines chemischen Abdichtungsprodukts (12) mindestens an den Verbindungen zwischen den Flanschen (4) der Verbindung (2), wobei die Leckableitungsanlage (9) während der Aushärtungszeit des chemischen Versiegelungsprodukts (12) in Betrieb bleibt (12), danach kann die Anlage (9) getrennt und abgebaut werden.

2. Die Methode gemäß Anspruch 1, die durch einen weiteren fünften Inspektionsschritt gekennzeichnet ist, bei dem nach Entfernung der Leckableitungsanlage (9) die Eindämmung des Lecks durch das Anwenden eines Leckdetektorsprühs auf den behandelten Bereich überprüft wird.

3. Das Verfahren gemäß Anspruch 1 oder 2, das darin gekennzeichnet ist, dass im Schritt der Konditionierung der Verbindungsfläche (2) auf der gesamten Oberfläche, auf der das chemische Dichtungsprodukt (12) aufgetragen wird, Rauheit erzeugt wird.

4. Die Methode gemäß einer der vorangegangenen Ansprüche, gekennzeichnet darin, dass im Schritt der Konditionierung der Verbindungsfläche (2) eine Nut oder ein Kanal mit einem Handfräser um den gesamten Umfang der Verbindungsfuge zwischen den Flanschen (4) gefertigt wird, um die Position des Dichtungsprodukts (12) zu lenken und zu halten, das in späteren Schritten um den gesamten Verbindungsumfang angewendet wird.

5. Die Methode gemäß einer der vorangegangenen Behauptungen, **gekennzeichnet dadurch, dass** im Schritt des Austauschs der Schraubenelemente (5) der Verbindung (2) die vorhandenen Schraubelemente (5) entfernt werden, die Kontaktspuren gereinigt werden, wobei alle Farb- oder Rostspuren durch Polieren um die Verbindungslöcher entfernt werden und eine vollständig glatte Oberfläche entsteht, und schwarzes Silikon wird beim Schrauben aufgetragen
an den Buchsen (7) der Saugbolzen (6).

6. Die Methode gemäß einer der vorangegangenen Behauptungen, gekennzeichnet darin, dass im Schritt des Austauschs der Schraubenelemente (5) der Verbindung (2) vier Saugbolzen (6) installiert werden.

7. Die Methode gemäß einer der vorangegangenen Ansprüche, gekennzeichnet darin, dass im Schritt der Anwendung des chemischen Dichtungsprodukts (12) 3 bis 5 Umdrehungen PTFE-Gewinde (Teflongewinde) mit mittlerer Intensität auf jede der Flanschverbindungen angewendet werden (4).

8. Das Verfahren gemäß Anspruch 7, das **dadurch gekennzeichnet ist, dass** anschließend 4 bis 5 Anwendungen von Versiegelungsprodukten auf der gesamten bearbeiteten Oberfläche in dünnen Schichten durchgeführt werden.

9. Die Methode gemäß Anspruch 2, die darin gekennzeichnet ist, dass während des Inspektionsschritts ein Verpacken des behandelten Bereichs durchgeführt werden kann; nach einer Mindestzeit von 4 Stunden muss eine Messung mit einer Vorrichtung durchgeführt werden, um Leckagen mit einem Infrarotsensor zu lokalisieren.

10. Leckablenkungsgeräte, anwendbar in einer Methode zur Beseitigung von Flüssigkeitsleckagen in metallischen Flanschverbindungen mittels Schraubelemente (5) durch Abdichtung des Stromkreises ohne Entleerung, insbesondere zur Beseitigung von Flüssigkeitslecks (1) in Verbindungen (2) von Rohren (3)
bis zu zwei oder drei Metallflanschen (4), die mit Schraubelementen verbunden sind (5), Verbindungen in Sperrabdeckungen oder wasserdichten Verbindungen mittels zusammengeschraubten Körpern oder Geräten, **gekennzeichnet durch** folgende Bestandteile:
- eine Vielzahl von Saugbolzen (6), bestehend aus hohlen, perforierten oder gerillten Gewinderohren, die so konfiguriert sind, dass sie einige der Schraubelemente (5) der Flansche (4) der Verbindung ersetzen (2), wobei jede der Saugbolzen (6) eine Vakuumverbindungsbuchse besitzt (7);
- ein Stromkreis von Leitschläuchen (10), die an einem Ende mit der Verbindungsbuchse (7) jeder Saugschraube (6) verbunden sind und am gegenüberliegenden Ende mit einem Ansaugrohrblock (13), der wiederum über einen weiteren Schlauch mit einer Vakuumpumpe (8) verbunden ist (10);
- ein Saugkrümmerblock (13), in dem die Leitschläuche (10) zusammenlaufen und verteilt sind; und
- eine Vakuumpumpe (8), die die ausgelaufene Flüssigkeit aufsaugt.

11. Die Leckableitungsanlage gemäß Anspruch 10, gekennzeichnet darin, dass sie auch einen Tank mit undichter Flüssigkeit enthält, der mit der Vakuumpumpe (8) verbunden ist, um die Flüssigkeit aus den Saugstiften aufzufangen (6).

## Revendications

1. Une méthode pour éliminer les fuites de fluide dans les connexions métalliques à brides utilisant des éléments à vis (5) en scellant le circuit fluide sans le vider, notamment pour éliminer les fuites de fluide (1) dans les connexions (2) de tuyaux (3) composés de deux ou trois brides métalliques (4) reliées par des éléments vissés (5), des connexions dans des caches de blanking ou des connexions étanches par des corps ou équipements vissés ensemble, **caractérisée par** comprendre, au minimum, les étapes suivantes :
- une première étape de conditionnement d'une zone de connexion (2) pour laisser le métal propre, de préférence en éliminant la peinture et/ou les couches de revêtement protecteur;
- une deuxième étape de remplacement d'au moins un des éléments des éléments de vis (5) qui fixent les brides (4) de la connexion, (1) avec des boulons d'aspiration, (6) munis de bagues de connexion, (7) adaptées pour le couplage d'une pompe à vide, (8) d'un équipement de déviation de fuite (9) ;
- une troisième étape d'installation et d'actionnement de l'équipement de déviation de fuite (9), par la connexion d'un circuit de tuyaux (10) aux bagues (7) des boulons d'aspiration (6) et qui, à leur tour, est relié à la pompe à vide (8) ;
- une quatrième étape d'application d'un produit d'étanchéité chimique (12) au moins sur les joints entre les brides (4) de la connexion (2), en maintenant l'équipement de déviation de fuite (9) en fonctionnement pendant le temps de durcissement de ledit produit chimique (12), après quoi ledit équipement (9) peut être déconnecté et désinstallé.

2. La méthode selon la revendication 1, **caractérisée par** une cinquième étape d'inspection dans laquelle, après avoir retiré l'équipement de déviation de fuite (9), le confinement de la fuite est vérifié en appliquant un spray détecteur de fuite sur la zone traitée.

3. La méthode, selon la revendication 1 ou 2, **caractérisée par le fait qu'**à l'étape du conditionnement de la zone de connexion (2), une rugosité est générée sur toute la surface sur laquelle le produit chimique d'étanchéité (12) sera appliqué.

4. La méthode selon l'une des revendications précédentes, **caractérisée par le fait qu'**à l'étape de conditionnement de la zone de connexion (2), une rainure ou un canal est réalisé avec une fraiseuse portative autour de tout le périmètre du joint de connexion entre les brides (4) pour guider et maintenir la position du produit d'étanchéité (12) qui est appliqué aux étapes suivantes autour de tout le périmètre de connexion.

5. La méthode selon l'une des revendications précédentes, **caractérisée par le fait qu'**à l'étape du remplacement des éléments de vis (5) de la connexion (2), les éléments de vis existants (5) sont retirés, les marques de contact nettoyées, éliminant toute trace de peinture ou de rouille en polissant autour des trous de connexion, laissant une finition parfaitement lisse, et du silicone noir est appliqué lors du vissage
sur les bagues (7) des boulons d'aspiration (6).

6. La méthode selon l'une des revendications précédentes, **caractérisée par le fait qu'**à l'étape du remplacement des éléments de vis (5) de la connexion (2), quatre boulons d'aspiration (6) sont installés.

7. La méthode selon l'une des revendications précédentes, **caractérisée par le fait qu'**à l'étape d'application du produit chimique d'étanchéité (12), 3 à 5 tours de filetage en PTFE (fil en téflon) tendu à intensité moyenne sont appliqués à chacune des connexions de bride (4).

8. La méthode selon la revendication 7, **caractérisée par le fait que**, par la suite, 4 à 5 applications de produit d'étanchéité seront effectuées sur toute la surface conditionnée, chacune en couches fines.

9. La méthode selon la revendication 2, **caractérisée par le fait que**, lors de l'étape de l'inspection, un sachage de la zone traitée peut être effectué, après un temps minimum de 4 heures, une mesure doit être effectuée avec un appareil pour localiser les fuites à l'aide d'un capteur infrarouge.

10. Équipement de déviation de fuite applicable dans une méthode d'élimination des fuites de fluide dans les connexions métalliques à brides utilisant des éléments à vis (5) en scellant le circuit sans le vider, notamment pour éliminer les fuites de fluide (1) dans les connexions (2) des tuyaux (3) réalisés jusqu'à deux ou trois brides métalliques (4) reliées par des éléments à vis (5), des connexions dans des caches de masquage ou des connexions étanches au moyen de carrosseries ou d'équipements vissés ensemble, **caractérisées par** :
- une pluralité de boulons d'aspiration (6) composés de tubes filetés creux, perforés ou rainurés, configurés pour remplacer certains éléments de vis (5) des brides (4) de la connexion (2), chacun des boulons d'aspiration (6) ayant une bague de connexion à dépression (7) ;
- un circuit de tuyaux de conduction (10) qui, à une extrémité, sont reliés à la bague de raccordement (7) de chaque boulon d'aspiration (6) et à l'extrémité opposée à un bloc collecteur (13) qui, lui-même, est relié à une pompe à vide (8) au moyen d'un autre tuyau (10) ;
- un bloc de collecteur d'aspiration (13) où les tuyaux de conduction (10) convergent et sont répartis ; et
- une pompe à vide (8) qui aspire le liquide fuit.

11. L'équipement de déviation de fuite selon la revendication 10, **caractérisé par** la présence également d'un réservoir contenant du fluide fuit, qui est relié à la pompe à vide (8) pour collecter le fluide provenant des broches d'aspiration (6).
